# EUROPEAN PATENT SPECIFICATION

(11) **EP 1 693 555 B1**
(45) Date of publication and mention of the grant of the patent: **27.05.2009**
(21) Application number: 05003326.5
(22) Date of filing: 16.02.2005
(51) Int. Cl.: F01N 3/34, F01N 7/00

(54) **Exhaust gas purifying device**
Abgasreinigungseinrichtung
Dispositif de purification de gaz d'échappement

(43) Date of publication of application: 23.08.2006
(73) Proprietor: Kwang Yang Motor Co., Ltd., Kaohsiung (TW)
(72) Inventor: Chen, Chung-Ying, Sanmin District, Kaohsiung (TW); Huang, Hsiang-Hsi, Lin Ya District, Kaohsiung (TW)
(74) Representative: Vossius & Partner

(56) References cited:
- EP-A- 0 507 372
- US-A- 5 832 725
- US-A1- 2004 255 575
- PATENT ABSTRACTS OF JAPAN vol. 013, no. 143 (M-811), 7 April 1989 (1989-04-07) & JP 63 306255 A (TOYOTA MOTOR CORP), 14 December 1988 (1988-12-14)
- PATENT ABSTRACTS OF JAPAN vol. 008, no. 186 (M-320), 25 August 1984 (1984-08-25) & JP 59 077049 A (TOYOTA JIDOSHA KK), 2 May 1984 (1984-05-02)
- PATENT ABSTRACTS OF JAPAN vol. 017, no. 252 (M-1412), 19 May 1993 (1993-05-19) & JP 04 370312 A (NISSAN MOTOR CO LTD), 22 December 1992 (1992-12-22)

## Description

The invention relates to an exhaust gas purifying device, more particularly to an exhaust gas purifying device for a vehicle.

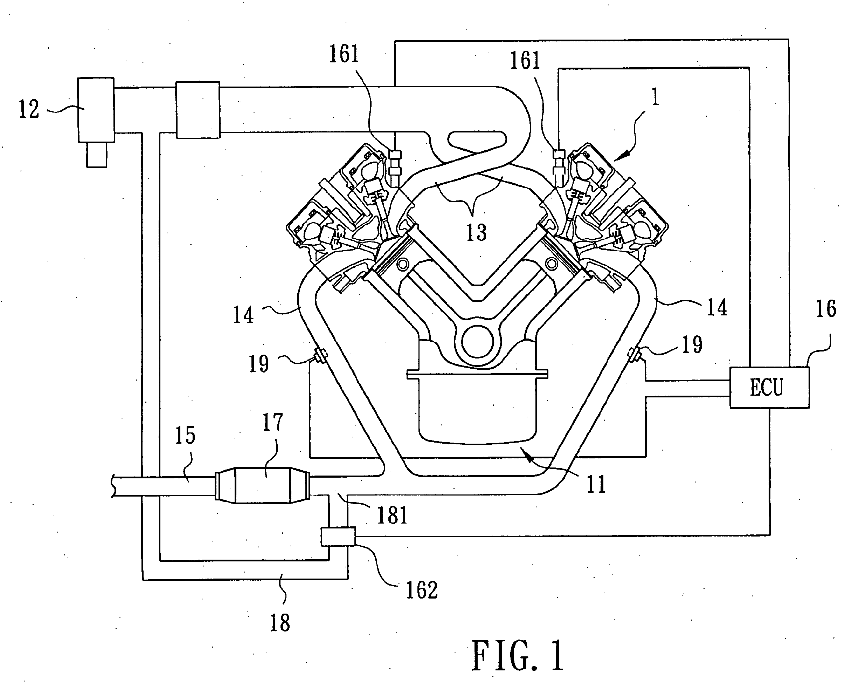

Referring to Figure 1, a conventional car engine exhaust device 1 includes an engine 11, an air filtering device 12, a pair of air intake pipes 13 for guiding air from the air filtering device 12 into the engine 11, a pair of exhaust pipes 14 for discharging exhaust gas from the engine 11 after combustion, an exhaust conduit 15 connected to the exhaust pipes 14 for removal of exhaust gas, an electronic control unit 16 (as known in the art, abbreviated as ECU) connected to the engine 11 for controlling operations of the engine 11, a catalytic converter 17 fixedly mounted at a middle section of the exhaust conduit 15, and a pair of nozzles 161 controlled by the electronic control unit 16 and mounted respectively to the ends of the air intake pipes 13 at positions proximate to the engine 11.

Nowadays, many countries have been more stringent on emissions standards of exhaust gas. Therefore, manufacturers of vehicles strive to develop products that comply with the relevant regulations and standards. Among them, some mount a pair of O₂ sensors 19 respectively on the middle sections of the exhaust pipes 14 for detecting the air fuel ratio (AFR) of exhaust gas flowing therethrough, and for transmitting signals of the detected result to the electronic control unit 16. Hence, the electronic control unit 16 controls the flow rates of the nozzles 161 so as to adjust the ratio of components of the exhaust gas through control of the AFR of an air-fuel mixture to be fed into the engine 11. As a result, the exhaust gas can comply with regulations of environmental protection.

Although the detection of the ratio of the components of the exhaust gas by the pair of O₂ sensors 19 is an efficient method, limitation due to lack of appropriate amount of air introduced into the exhaust gas results in inefficiency on reaction of oxidization. As such, the work efficiency of the catalytic converter 17 is prone to be low.

In view of this, in the configuration of the exhaust device 1, a filtered air-guiding pipe 18 is mounted on the exhaust conduit 15, and is disposed upstream of the catalytic converter 17 for guiding filtered air to flow from the air filtering device 12 into the exhaust conduit 15. Inaddition, anelectromagnetic valve 162 is disposed on the filtered air-guiding pipe 18 for limiting flow of the filtered air from the filtered air-guiding pipe 18 into the exhaust conduit 15, and is capable of being opened or closed under the control of the electronic control unit 16. When the electromagnetic valve 162 is opened, filtered air is sucked into the exhaust conduit 15 by means of negative pressure in the exhaust conduit 15. As such, pollutants that are carried within exhaust gas discharged from the catalytic converter 17 can be reduced significantly.

However, a filtered air-guiding port 181 in the filtered air-guiding pipe 18 is distal from the pair of exhaust pipes 14. Thus, the filtered air sucked into the exhaust conduit 15 is insufficient, and therefore decreases the work efficiency of the catalytic converter 17. Furthermore, the temperature of exhaust gas discharged from the engine 11 is rather high. This results in malfunction and even damage of the electromagnetic valve 162.

Therefore, it is desirable to redesign allocation of the O₂ sensors 19 and the filtered air-guiding pipe 18 so as to make eminent improvement on work efficiency of the catalytic converter 17, and so as to monitor combustion states in the engine 11, thereby meeting the requirement of current regulations of environmental protection.

US 2004/0255575 A discloses a failure detecting apparatus for an exhaust secondary air supply system. Air from an air cleaner passes through a delivery pipe and is supplied to a position upstream of an 02 sensor.

JP 63-306255 A discloses an air-fuel ratio control method for an internal combustion engine. An 02 sensor is arranged on one exhaust manifold while the other 02 sensor is arranged on the other exhaust manifold. A secondary air feeder is coupled to the one exhaust manifold. When secondary air is supplied, feedback control of air-fuel ratio is performed based on an oxygen concentration detected through the other 02 sensor.

JP 4-370312 A discloses an exhaust gas device for an internal combustion engine, wherein an 02 sensor is arranged on an exhaust pipe while a secondary air introducing pipe is coupled to a different exhaust pipe.

Therefore, the main object of this invention is to provide an exhaust gas purifying device for a vehicle that can overcome the aforesaid drawbacks associated with the prior art.

The object is achieved with the features of claim 1.

Other objects and advantages of this invention will become apparent in the following detailed description of the preferred embodiments with reference to the accompanying drawings, of which:
Figure 1 is a schematic view of a conventional exhaust gas purifying device for a car;
Figure 2 is a schematic view of an exhaust gas purifying device for a vehicle as a reference;
Figure 3 is a schematic view of another exhaust gas purifying device for a vehicle as a reference; and
Figure 4 is a schematic view of a preferred embodiment of an exhaust gas purifying device for a vehicle according to this invention.

Before this invention is described in greater detail with reference to the reference examples and the preferred embodiment, it should be noted herein that like elements are denoted by the same reference numerals throughout the disclosure.

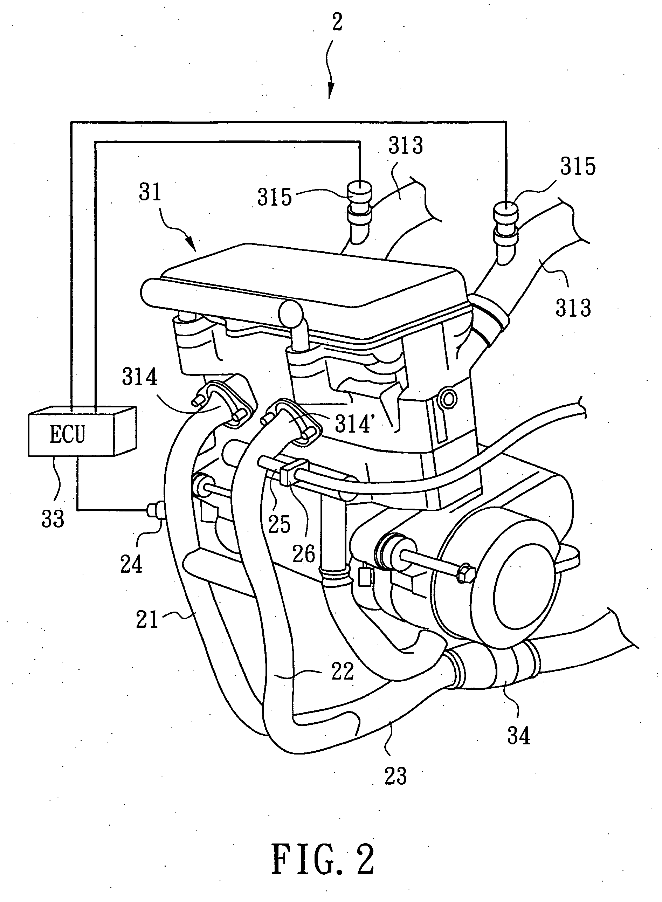

Referring to Figure 2, an exhaust gas purifying device 2 as a reference is shown to be adapted for a vehicle, such as a motorcycle, etc. The vehicle includes an engine 31, an electronic control unit 33 and a catalytic converter 34. The engine 31 is a two-cylinder engine, and includes a pair of air intake pipes 313 spaced apart from each other, a first exhaust port unit, a second exhaust port unit, a first exhaust pipe unit, a second exhaust pipe unit, an exhaust conduit 23, and a pair of nozzles 315 controlled by the electronic control unit 33 and extending respectively into the ends of the air intake pipes 313 at positions proximate to the engine 31.

The electronic control unit 33 is well known in the art as ECU, and is connected to the engine 31 for determining the AFR of an air-fuel mixture through detection signals indicating the concentration of a specific component in exhaust gas.

The first exhaust port unit includes a first exhaust port 314.

The second exhaust port unit includes a second exhaust port 314'.

The first exhaust pipe unit includes a first exhaust pipe 21 that has an upstream end which is connected fixedly to the engine 31 and which is in fluid communication with the first exhaust port 314 in the engine 31.

The second exhaust pipe unit includes a second exhaust pipe 22 that has an upstream end which is connected fixedly to the engine 31 and which is in fluid communication with the second exhaust port 314' in the engine 31.

The exhaust conduit 23 interconnects downstream ends of the first exhaust pipe 21 and the second exhaust pipe 22.

The catalytic converter 34 is fixedly mounted on the exhaust conduit 23 for cleaning the exhaust gas confluent with the exhaust gas flowing from the first and second exhaust pipes 21, 22.

The exhaust gas purifying device 2 includes a sensor unit, a guiding pipe unit, and a valve unit.

The sensor unit includes an O₂ sensor 24 disposed on the first exhaust pipe 21 for detecting the AFR of exhaust gas flowing through the first exhaust pipe 21, and for transmitting signals of the detected results to the electronic control unit 33. Hence, the electronic control unit 33 controls the flow rates of the nozzles 315 so as to adjust the ratio of components of the exhaust gas through control of the AFR of an air-fuel mixture to be fed into the engine 31. Since the operation of the electronic control unit 33 is well known to those skilled in the art, further description thereof will be omitted herein for the sake of brevity.

The guiding pipe unit includes a filtered air-guiding pipe 25 that accepts filtered air from an air filter (not shown) in a known manner and that is connected fixedly to and that is in spatial communication with the second exhaust pipe 22 at a position adjacent to the second exhaust port 314' in the engine 31 for guiding the filtered air to flow into the second exhaust pipe 22.

The valve unit includes a one-way valve 26 disposed on the filtered air-guiding pipe 25 for limiting flow of the filtered air from the filtered air-guiding pipe 25 into the second exhaust pipe 22.

In operation, filtered ambient air passes through the air intake pipes 313 to mix with fuel sprayed from the nozzles 315 so as to form the air-fuel mixture for' subsequent entry to the engine 31 for combustion and explosion. Thereafter, large amount of exhaust gas is discharged from the engine 31 through the first and second exhaust ports 314, 314'.

A portion of the exhaust gas flows into the first exhaust pipe 21 through the first exhaust port 314. The O₂ sensor 24 detects the AFR of the exhaust gas flowing through the first exhaust pipe 21, and transmits an electric signal to the electronic control unit 33. The optimal AFR is 14.7. When the AFR of the exhaust gas flowing through the first exhaust pipe 21 is 14.7, the CO-content in the exhaust gas is between 0.6 and 0.8%. Thus, when the CO-content is greater than 0.8%, the amount of fuel sprayed from the corresponding nozzle 315 is reduced under the control of the electronic control unit 33. When the CO-content is less than 0.6%, the amount of fuel sprayed from the corresponding nozzle 315 is increased under the control of the electronic control unit 33.

The remainder of the exhaust gas flows into the second exhaust pipe 22 through the second exhaust port 314'. Filtered air is introduced into the second exhaust pipe 22 through the filtered air-guiding pipe 25 to mix with the exhaust gas so as to facilitate oxidization operation in the catalytic converter 34, thereby reducing HC and CO in the exhaust gas emitted from the vehicle.

Since the filtered air-guiding pipe 25 is connected to the second exhaust pipe 22, while the O₂ sensor 24 is disposed on the first exhaust pipe 21, the AFR detection of the O₂ sensor 24 is not adversely affected. Note that the O₂ sensor 24 is a very sensitive component. Should the filtered air-guiding pipe 25 and the O₂ sensor 24 be connected to the same pipe, the filtered air flowing from the filtered air-guiding pipe 25 will diminish the accuracy of the AFR detection of the O₂ sensor 24. Therefore, the allocation of the filtered air-guiding pipe 25 and the O₂ sensor 24 optimizes the control of the electronic control unit 33.

Moreover, the position of the filtered air-guiding pipe 25 relative to the engine 31 is another outstanding feature. Due to the fact that instant suction force exerted on the filtered air within the filtered air-guiding pipe 25 is generated by means of the negative pressure from the engine 31, the closer the junction between the second exhaust pipe 22 and the filtered air-guiding pipe 25 is located relative to the second exhaust port 314', the more easily the filtered air in the filtered air-guiding pipe 25 is sucked into the second exhaust pipe 22. Because the filtered air-guiding pipe 25 is disposed in proximity to the second exhaust port 314', when the exhaust gas flows through the second exhaust pipe 22, the filtered air can be sucked quickly from the filtered air-guiding pipe 25 into the second exhaust pipe 22.

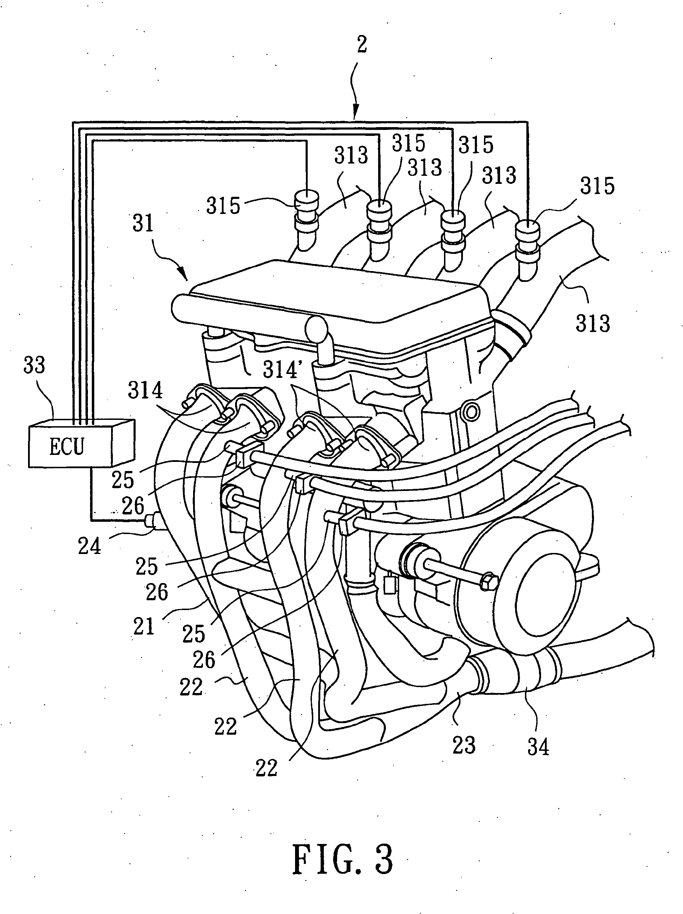

Figure 3 shows another exhaust gas purifying device 2 as a reference, which is a modification of the device shown in Fig. 2 and which is adapted for a four-cylinder engine 31. The four-cylinder engine 31 includes a first exhaust port unit consisting of a first exhaust port 314, a second exhaust port unit consisting of three second exhaust ports 314', a first exhaust pipe unit consisting of a first exhaust pipe 21, and a second exhaust pipe unit consisting of three second exhaust pipes 22. Unlike the device shown in Fig. 2, the guiding pipe unit includes three filtered air-guiding pipes 25, and the valve unit includes three one-way valves 26.

The filtered air-guiding pipes 25 are connected respectively and fixedly to and are in fluid communication with the second exhaust pipes 22. The one-way valves 26 are disposed respectively on the filtered air-guiding pipes 25 for limiting flow of the filtered air from the filtered air-guiding pipes 25 into the second exhaust pipes 22.

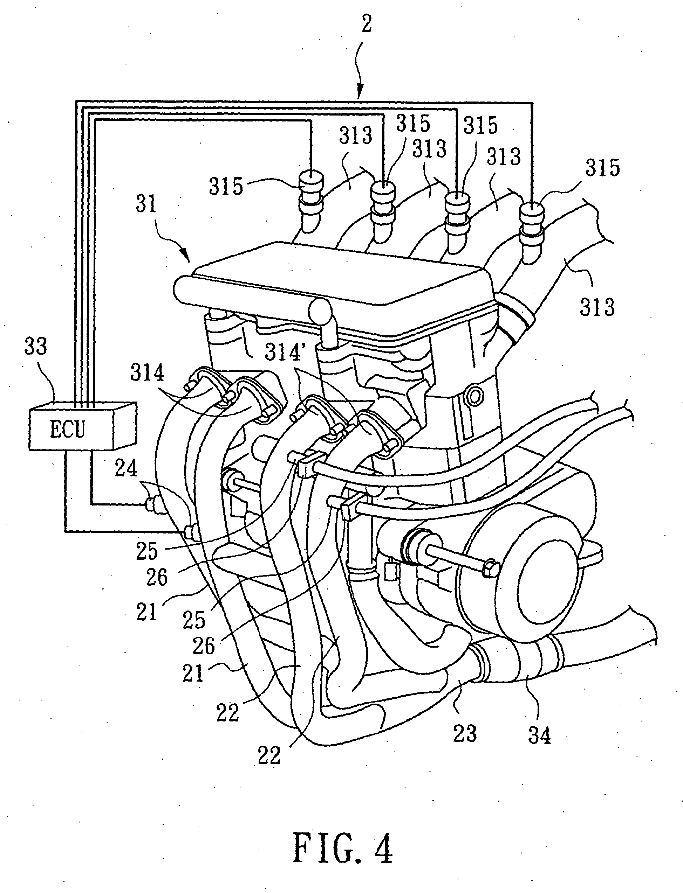

Figure 4 shows a preferred embodiment of an exhaust gas purifying device 2 according to this invention, which is another modification of the device shown in Fig. 2 and which is adapted for a four-cylinder engine 31. The four-cylinder engine 31 includes a first exhaust port unit consisting of two first exhaust ports 314, a second exhaust port unit consisting of two second exhaust ports 314', a first exhaust pipe unit consisting of two first exhaust pipes 21, and a second exhaust pipe unit consisting of two second exhaust pipes 22.

Unlike the device shown in Fig. 2, the sensor unit includes a pair of O₂ sensors 24 disposed respectively on the first exhaust pipes 21, the guiding pipe unit includes a pair of filtered air-guiding pipes 25 that are connected respectively and fixedly to and that are in fluid communication with the second exhaust pipes 22 for guiding filtered air to flow into the second exhaust pipes 22, and the valve unit includes a pair of one-way valves 26 disposed respectively on the filtered air-guiding pipes 25 for limiting flow of the filtered air from the filtered air-guiding pipes 25 into the second exhaust pipes 22.

In sum, since the O₂ sensors 2.4 and the filtered air-guiding pipes 25 are connected respectively to the first and second exhaust pipes 21, 22, the filtered air flowing from the filtered air-guiding pipes 25 cannot affect the AFR detection of the O₂ sensors 24. Furthermore, because the filtered air-guiding pipes 25 are adjacent to the second exhaust ports 314', respectively, the filtered air can be sucked quickly into the second exhaust pipes 22 for assisting the catalytic converter 34 in decreasing the amount of pollutants in the exhaust gas.

## Claims

1. An exhaust gas purifying device (2) for a vehicle, the vehicle including
an engine (31) having a first exhaust port unit including at least one first exhaust port (314), and a second exhaust port unit including at least one second exhaust port (314'),
a first exhaust pipe unit including at least one first exhaust pipe (21) connected fixedly to the engine (31) and in fluid communication with the first exhaust port (314) in the engine (31), and
a second exhaust pipe unit including at least one second exhaust pipe (22) connected fixedly to the engine (31) and in fluid communication with the second exhaust port (314') in the engine (31),
wherein the exhaust gas purifying device (2) includes:
a sensor unit including at least one O₂ sensor (24) disposed on the first exhaust pipe (21) for detecting the air fuel ratio of exhaust gas flowing through the first exhaust pipe (21) ;
a guiding pipe unit including at least one filtered air-guidingpipe (25) connected fixedly to and in spatial communication with the second exhaust pipe (22) at a position adjacent to the second exhaust port (314') for guiding filtered air to flow into the second exhaust pipe (22); and
a valve unit including a one-way valve (26) disposed on the filtered air-guiding pipe (25) for limiting flow of the filtered air from the filtered air-guiding pipe (25) into the second exhaust pipe (22),
wherein the O₂ sensor (24) is positioned so as to present flow of the filtered air from the filtered air-guiding pipe (25) onto the O₂ sensor (24),
**characterized in that** :
the first exhaust port unit including a pair of first exhaust ports (314), the second exhaust port unit including a pair of second exhaust ports (314'), the first exhaust pipe unit including a pair of first exhaust pipes (21) in fluid communication with the first exhaust ports (314), respectively, the second exhaust pipe unit including a pair of second exhaust pipes (22) in fluid communication with the second exhaust ports (314'), respectively, wherein the guiding pipe unit includes a pair of filtered air-guiding pipes (25) that are connected respectively and fixedly to and that are in fluid communication with the second exhaust pipes (22) for guiding filtered air to flow into the second exhaust pipes (22), the sensor unit including a pair of O₂ sensors (24) disposed respectively on the first exhaust pipes (21), each of the O₂ sensors (24) detecting the air fuel ratio of exhaust gas flowing through a respective one of the first exhaust pipes (21), the valve unit including a pair of one-way valves (26) disposed respectively on the filtered air-guiding pipes (25) for limiting flow of the filtered air from the filtered air-guiding pipes (25) into the second exhaust pipes (22).

## Patentansprüche

1. Abgasreinigungsvorrichtung (2) für ein Fahrzeug, wobei das Fahrzeug aufweist:
einen Motor (31) mit einer ersten Abgaskanaleinheit, die mindestens einen ersten Abgaskanal (314) aufweist, und
einer zweiten Abgaskanaleinheit, die mindestens einen zweiten Abgaskanal (314') aufweist,
eine erste Abgasrohreinheit, die mindestens ein erstes Abgasrohr (21) aufweist, das mit dem Motor (31) fest verbunden ist und mit dem ersten Abgaskanal (314) im Motor (31) in Fluidverbindung steht, und
eine zweite Abgasrohreinheit, die mindestens ein zweites Abgasrohr (22) aufweist, das mit dem Motor (31) fest verbunden ist und mit dem zweiten Abgaskanal (314') im Motor (31) in Fluidverbindung steht,
wobei die Abgasreinigungsvorrichtung (2) aufweist:
eine Sensoreinheit mit mindestens einer am ersten Abgasrohr (21) angeordneten Lambdasonde (24) zum Detektieren des Luft/Kraftstoff-Verhältnisses von Abgas, das das erste Abgasrohr (21) durchströmt;
eine Führungsrohreinheit mit mindestens einem Reinluft-Führungsrohr (25), das mit dem zweiten Abgasrohr (22) an einer zum zweiten Abgaskanal (314') benachbarten Position fest verbunden ist und damit in räumlicher Verbindung steht, zum Führen von Reinluft, um sie in das zweite Abgasrohr (22) strömen zu lassen; und
eine Ventileinheit mit einem am Reinluft-Führungsrohr (25) angeordneten Einwegventil (26) zum Begrenzen von Strömung der Reinluft aus dem Reinluft-Führungsrohr (25) in das zweite Abgasrohr (22),
wobei die Lambdasonde (24) so positioniert ist, dass sie Strömung der Reinluft aus dem Reinluft-Führungsrohr (25) auf die Lambdasonde (24) verhindert,
**dadurch gekennzeichnet, dass** die erste Abgaskanaleinheit ein Paar erste Abgaskanäle (314) aufweist, die zweite Abgaskanaleinheit ein Paar zweite Abgaskanäle (314') aufweist, die erste Abgasrohreinheit ein Paar erste Abgasrohre (21) in jeweiliger Fluidverbindung mit den ersten Abgaskanälen (314) aufweist, die zweite Abgasrohreinheit ein Paar zweite Abgasrohre (22) in jeweiliger Fluidverbindung mit den zweiten Abgaskanälen (314') aufweist, wobei die Führungsrohreinheit ein Paar Reinluft-Führungsrohre (25) aufweist, die jeweils mit den zweiten Abgasrohren zum Führen von Reinluft verbunden und daran befestigt sind und die mit ihnen in Fluidverbindung stehen, um sie in die zweiten Abgasrohre (22) strömen zu lassen, wobei die Sensoreinheit ein Paar Lambdasonden (24) aufweist, die jeweils an den ersten Abgasrohren (21) angeordnet sind, jede der Lambdasonden (24) das Luft/Kraftstoff-Verhältnis von Abgas detektiert, das ein jeweiliges der ersten Abgasrohre (21) durchströmt, und die Ventileinheit ein Paar Einwegventile (26), die jeweils an den Reinluft-Führungsrohren (25) angeordnet sind, zum Begrenzen von Strömung der Reinluft aus den Reinluft-Führungsrohren (25) in die zweiten Abgasrohre (22) aufweist.

## Revendications

1. Un dispositif de purification de gaz d'échappement (2) pour un véhicule, le véhicule comprenant
un moteur (31) ayant une première unité d'orifice d'échappement comprenant au moins un premier orifice d'échappement (314), et une seconde unité d'orifice d'échappement comprenant au moins un second orifice d'échappement (314'),
une première unité de tuyau d'échappement comprenant au moins un premier tuyau d'échappement (21) relié de façon fixe au moteur (31) et en communication fluidique avec le premier orifice d'échappement (314) du moteur (31), et
une seconde unité de tuyau d'échappement comprenant au moins un second tuyau d'échappement(22) relié de façon fixe au moteur (31) et en communication fluidique avec le second orifice d'échappement (314') dans le moteur (31),
le dispositif de purification de gaz d'échappement (2) comprenant :
une unité de capteur comprenant au moins une sonde d'oxygène (24) agencée sur le premier tuyau d'échappement (21) destinée à détecter le rapport air/carburant du gaz d'échappement s'écoulant dans le premier tuyau d'échappement (21) ;
une unité de tuyau de guidage comprenant au moins un tuyau de guidage d'air filtré (25) relié de façon fixe et en communication spatiale avec le second tuyau d'échappement (22) en une position située à proximité du second orifice d'échappement (314'), destiné à guider un air filtré pour qu'il s'écoule dans le second tuyau d'échappement (22) ; et
une unité de soupape comprenant une soupape unidirectionnelle (26) agencée sur le tuyau de guidage d'air filtré (25) et destinée à limiter l'écoulement de l'air filtré provenant du tuyau de guidage d'air filtré (25) dans le second tuyau d'échappement (22),
la sonde d'oxygène (24) étant positionnée de façon à empêcher l'écoulement de l'air filtré provenant du tuyau de guidage d'air filtré (25) sur la sonde d'oxygène (24),
**caractérisé en ce** qui :
la première unité d'orifice d'échappement comprend deux premiers orifices d'échappement (314), la seconde unité d'orifice d'échappement comprend deux seconds orifices d'échappement (314'), la première unité de tuyau d'échappement comprend deux premiers tuyaux d'échappement (21) en communication fluidique avec les premiers orifices d'échappement (314), respectivement, la seconde unité de tuyau d'échappement comprend deux seconds tuyaux d'échappement (22) en communication fluidique avec les seconds orifices d'échappement (314'), respectivement, l'unité de tuyau de guidage comprenant deux tuyaux de guidage d'air filtré (25) respectivement reliés de façon fixe et en communication fluidique avec les seconds tuyaux d'échappement (22) afin de guider l'air filtré pour qu'il s'écoule dans les seconds tuyaux d'échappement (22), l'unité de capteur comprenant deux sondes d'oxygène (24) agencées respectivement sur les premiers tuyaux d'échappement (21), chacune des sondes d'oxygène (24) détectant le rapport air/carburant du gaz d'échappement s'écoulant à travers l'un respectif des premiers tuyaux d'échappement (21), l'unité de soupape comprenant deux soupapes unidirectionnelles (26) agencées respectivement sur les tuyaux de guidage d'air filtré (25) destinées à limiter l'écoulement d'air filtré provenant des tuyaux de guidage d'air filtré (25) dans les seconds tuyaux d'échappement (22).
